# EUROPÄISCHE PATENTSCHRIFT

(11) **EP 3 509 980 B1**
(45) Veröffentlichungstag und Bekanntmachung des Hinweises auf die Patenterteilung: **05.08.2020**
(21) Anmeldenummer: 17728847.9
(22) Anmeldetag: 09.06.2017
(51) Int. Cl.: A23C 3/033, B67C 3/04, A23L 2/46

(54) **ABFÜLLANLAGE ZUM WÄRMEBEHANDELN UND ABFÜLLEN EINER FLÜSSIGKEIT**
PLANT FOR HEAT TREATMENT AND FILLING UF LIQUIDS
INSTALLATION POUR TRAITEMENT TERMIQUE ET RMEPLISSAGE DES LIQUIDES

(30) Priorität: 12.09.2016 DE 102016217342
(43) Veröffentlichungstag der Anmeldung: 17.07.2019
(73) Patentinhaber: Krones AG, 93073 Neutraubling (DE)
(72) Erfinder: RUNGE, Torsten, 93073 Neutraubling (DE); ENZMANN, Katja, 93073 Neutraubling (DE); AMANN, Roland, 93073 Neutraubling (DE); FEILNER, Roland, 93073 Neutraubling (DE); LUTHE-GRUNDLER, Pascal, 93073 Neutraubling (DE)
(74) Vertreter: Grünecker Patent- und Rechtsanwälte PartG mbB
(86) Internationale Anmeldenummer: PCT/EP2017/064088
(87) Internationale Veröffentlichungsnummer: WO 2018/046149

(56) Entgegenhaltungen:
- WO-A1-2011/143782
- DE-A1-102007 014 702
- US-B1- 6 329 006

## Beschreibung

Die Erfindung bezieht sich auf eine Abfüllanlage für eine Flüssigkeit, insbesondere beispielsweise für ein Getränk oder eine Getränkekomponente wie Saft, Milch, Wasser oder Ähnliches. Eine erfindungsgemäße Abfüllanlage ist insbesondere zum Wärmebehandeln (zum Beispiel Pasteurisieren) und anschließenden Abfüllen der Flüssigkeit geeignet.

Aus dem Stand der Technik sind Abfüllanlagen bekannt, mit denen eine Flüssigkeit heiß abgefüllt werden kann, beispielsweise aus der DE 10 2008 056 597 A1 oder der DE 10 2011 082 286 A1.

Auch ist es bekannt, eine Flüssigkeit mit Wärme zu behandeln, zum Beispiel zu pasteurisieren, um die Haltbarkeit zu verlängern, beispielsweise aus der DE 10 2011 082 286 A1.

WO 2011/143782 offenbart eine Anlage zur Pasteurisierung eines aus mindestens einer flüssigen, pumpfähigen Komponente bestehendem Flüssigkeitsprodukts, wobei ein Pasteurisierungskreislauf einen Pufferbehälter zum Halten des Produkts während einer vorgeschriebenen, konstanten Kontaktzeit zur Pasteurisierung und bei einer schwankenden Durchflussmenge des Produkts durch den Pufferbehälter umfasst, und ein entsprechendes Verfahren, bei dem das Produkt im Pasteurisierungskreislauf einem Pufferbehälter zugeführt und darin während einer vorgeschriebenen, konstanten Kontaktzeit für die Pasteurisierung und bei einer schwankenden Durchflussmenge des Produkts durch den Pufferbehälter gehalten wird und offenbart damit eine Anlage zum Wärmebehandeln von einer Flüssigkeit, welche nach der Behandlung an einen Füller weitergeleitet wird, umfassend: einen Vorwärmer zum Vorwärmen der Flüssigkeit, einen Erhitzer zum Erhitzen der Flüssigkeit nach dem Vorwärmen, einen Rückkühler zum Abkühlen der Flüssigkeit nach dem Erhitzen, wobei die Anlage zum Wärmebehandeln für eine Heißabfüllung und eine Kaltabfüllung geeignet ist.

Der Erfindung liegt nun die Aufgabe zu Grunde, eine verbesserte Abfüllanlage mit breiteren Anwendungsmöglichkeiten und/oder verbesserter Effizienz bereitzustellen.

Die Erfindung umfasst eine Abfüllanlage nach Anspruch 1 und ein Verfahren zum Wärmebehandeln und Abfüllen einer Flüssigkeit nach Anspruch 13. Einige weitere beispielhafte Ausführungsformen sind in den abhängigen Ansprüchen beschrieben.

Eine Abfüllanlage zum Wärmebehandeln und Abfüllen einer Flüssigkeit umfasst insbesondere einen Vorwärmer zum Vorwärmen der Flüssigkeit, einen Erhitzer zum Erhitzen der Flüssigkeit nach dem Vorwärmen (Erhitzer für die Flüssigkeit) und einen Rückkühler zum Abkühlen der Flüssigkeit nach dem Erhitzen.

Des Weiteren umfasst eine erfindungsgemäße Abfüllanlage einen Füller zum Abfüllen der Flüssigkeit. Die Abfüllanlage ist für eine Heißabfüllung und eine Kaltabfüllung einer Flüssigkeit geeignet. Unter Heißabfüllung werden Abfülltemperaturen von 80°C bis 95°C, bevorzugt 85°C bis 90°C verstanden. Kaltfülltemperaturen liegen typischerweise zwischen 1°C und 20°C, bevorzugt zwischen 4°C und 10°C. Unter Kaltabfüllung kann auch das Füllen bei Raumtemperatur verstanden sein, welches bei Temperaturen von 20°C bis 30°C abläuft. In einer erfindungsgemäßen Abfüllanlage ist der Flüssigkeitsweg vom Vorwärmer zum Füller für die Heißabfüllung von dem Flüssigkeitsweg vom Vorwärmer zum Füller für die Kaltabfüllung verschieden, und die Abfüllanlage umfasst eine Schaltmöglichkeit zum Umschalten zwischen den beiden Flüssigkeitswegen.

Der Flüssigkeitsweg wird typischerweise durch Rohre festgelegt, durch die die Flüssigkeit befördert wird. Einzelne genannte Stationen, wie beispielsweise der Vorwärmer, Erhitzer und

Rückkühler, durch die die Flüssigkeit dabei geführt wird, können beispielsweise als Rohrabschnitte (Sektionen) oder einen Rohrabschnitt umfassenden Wärmetauscher oder Ähnliches ausgebildet sein.

Die Abfüllanlage ist für eine Heißabfüllung und eine Kaltabfüllung geeignet, und so ausgebildet, dass der Weg, den die Flüssigkeit durchlaufen soll, bei einer Heißabfüllung ein anderer Flüssigkeitsweg ist als der Flüssigkeitsweg, den die Flüssigkeit bei einer Kaltabfüllung durchlaufen soll. Dies kann insbesondere bedeuten, dass vorhandene Rohre bei einer Heißabfüllung und Kaltabfüllung in geänderter Reihenfolge durchlaufen werden. Die Abfüllanlage umfasst eine Schaltmöglichkeit zum Umschalten zwischen den beiden Flüssigkeitswegen.

Die Schaltmöglichkeit zum Umschalten zwischen den beiden Flüssigkeitswegen kann beispielsweise in Form eines Panels ausgebildet sein, in dem Rohrenden durch umsteckbare Verbindungsstücke geeignet verbunden werden können. Alternativ kann die Schaltmöglichkeit als ein Ventilknoten ausgebildet sein, der eine Verbindung verschiedener Rohre durch Ventile ermöglicht und damit eine geeignete Schaltung für das Umschalten zwischen dem Flüssigkeitsweg für eine Heiß- und eine Kaltabfüllung ermöglicht. Eine Schaltmöglichkeit kann als weitere Alternative eine Kombination von einem Panel und Ventilen umfassen.

Der Erhitzer ist typischerweise dafür ausgebildet, die Flüssigkeit auf eine höhere Temperatur als der Vorwärmer zu erhitzen. Mögliche Temperaturen zur Wärmebehandlung (beispielsweise Pasteurisieren), die von einem Erhitzer erreichbar sein müssen sind flüssigkeitsspezifisch, können beispielsweise zwischen 55°C und 140°C, insbesondere beispielsweise zwischen 75°C und 100°C liegen.

Der Vorwärmer, der Erhitzer, der Rückkühler und weitere Elemente, die zum Behandeln der Flüssigkeit verwendet werden, werden im Folgenden auch allgemein als "Behandlungsstationen" bezeichnet. Die Behandlungsstationen können jede ein- oder mehrstufig (also als ein Teil oder mehrere Teile), beispielsweise zweistufig ausgebildet sein.

Die Abfüllanlage kann weitere Behandlungsstationen umfassen, beispielsweise zusätzliche Kühler und/oder Erhitzer (und zwar sowohl für die Flüssigkeit, als auch für die Sekundärkreisläufe, mit denen der Flüssigkeit Wärme zu- oder abgeführt wird), eine Heißhaltestrecke, in der die Flüssigkeit nach Durchlauf durch den Erhitzer heiß gehalten werden kann, um die Wärmebehandlung über einen gewissen Zeitraum fortzusetzen, und weitere aus der Flüssigkeitsbehandlung bekannte Behandlungsstationen wie beispielsweise einen Entgaser und/oder einen Homogenisator, die beispielsweise zwischen Vorwärmer und Erhitzer oder zwischen zwei Stufen eines zwei- oder mehrstufig ausgebildeten Vorwärmers angeordnet sein können.

Der Vorwärmer und/oder der Rückkühler können jeweils als Wärmetauscher ausgebildet sein. Im Folgenden wird für den Sekundärkreislauf eines Wärmetauschers, also für den Kreislauf des Mediums, mit dem der (abzufüllenden) Flüssigkeit Wärme zugeführt oder mit dem der Flüssigkeit Wärme abgeführt wird, der Begriff "Kühlmittelkreislauf" verwendet und das Medium entsprechend als "Kühlmittel" bezeichnet. Natürlich kann ein solches "Kühlmittel" auch zum Heizen oder schrittweise Vorwärmen verwendet werden. Typischerweise kann als Kühlmittel beispielsweise Wasser verwendet werden.

In einer Abfüllanlage, in der sowohl der Vorwärmer als auch der Rückkühler als Wärmetauscher ausgebildet sind, können der Kühlmittelkreislauf des Vorwärmers und der Kühlmittelkreislauf des Rückkühlers in einer ersten Einstellung als zwei voneinander getrennte Kühlmittelkreisläufe betreibbar sein und in einer zweiten Einstellung als verbundener Kühlmittelkreislauf betreibbar sein.

Eine Abfüllanlage kann eine Schaltung zum Schalten zwischen diesen beiden Einstellungen umfassen. Diese Schaltung kann zum Beispiel in Form von Ventilen oder durch andere bekannte Maßnahmen ausgebildet sein.

Typischerweise wird eine Abfüllanlage so betrieben, dass der Kühlmittelkreislauf des Vorwärmers und der Kühlmittelkreislauf des Rückkühlers bei einer Heißabfüllung in der ersten Einstellung, also als zwei getrennt voneinander laufende Kühlmittelkreisläufe, betrieben werden und bei einer Kaltabfüllung in der zweiten Einstellung, also als verbundener Kühlmittelkreislauf. Dies ist vorteilhaft, da die zu übertragenden Wärmemengen und Temperaturen der Kühlmittelkreisläufe jeweils unterschiedlich sind.

In der zweiten Einstellung kann typischerweise der Kühlmittelkreislauf so ausgebildet sein, dass der Rücklauf des Rückkühlers (direkt oder über weitere Stationen, z.B. durch einen oder mehrere weitere Wärmetauscher oder Ähnliches) zum Vorlauf des Vorwärmers geführt wird, so dass die beim Rückkühler anfallende Wärme zum Vorwärmen der Flüssigkeit verwendet werden kann. In der zweiten Einstellung kann der Kühlmittelkreislauf so ausgebildet sein, dass das Kühlmittel durch Teile der beiden getrennten Kühlmittelkreisläufe in genau einem geschlossenen Kreislauf geführt werden kann, und bei Durchlauf des Kreises durch den Rückkühler und den Vorwärmer geleitet wird. Dies kann beispielsweise umfassen, dass im verbundenen Kühlmittelkreislauf der Kühlmittelkreislauf des Rückkühlers und des Vorwärmers zusammenfallen. In der zweiten Einstellung (bei einer Kaltabfüllung) ist die Wärmerückgewinnung besonders effizient, der Rückkühler ist typischerweise auf 80 % bis 88 % Wärmerückgewinnung ausgelegt.

Eine Abfüllanlage kann des Weiteren einen Trimkühler zum Abkühlen der Flüssigkeit auf eine bestimmte Temperatur (auf dem Flüssigkeitsweg typischerweise hinter dem Erhitzer und einer optional vorhandenen Heißhaltestrecke) umfassen. Der Trimkühler kann auf dem Flüssigkeitsweg zwischen Erhitzer und Füller angeordnet sein, insbesondere kann er so angeordnet sein, dass er sowohl bei einer Heißabfüllung als auch bei einer Kaltabfüllung durchlaufen wird. Dieser Trimkühler (Korrekturkühler) kann bei der Heißabfüllung dazu verwendet werden, die erhitzte Flüssigkeit auf die Abfülltemperatur abzukühlen. Bei einer Kaltabfüllung kann ebenfalls für eine leichte Abkühlung der Flüssigkeit vor dem Durchlauf durch den Rückkühler eingesetzt werden.

Ein Trimkühler kann als Wärmetauscher ausgebildet sein.

Der Trimkühler kann so angeordnet sein, dass sein Kühlmittelkreislauf mit dem Kühlmittelkreislauf des Vorwärmers (sowohl in der ersten als auch der zweiten Einstellung der Kühlmittelkreisläufe) zusammenfällt, so dass Kühlmittel aus dem Rücklauf des Trimkühler zum Vorwärmen der Flüssigkeit im Vorwärmer verwendet werden kann.

In einer anderen Ausführungsform ist der Trimkühler in der Abfüllanlage so angeordnet, dass er Wärme zwischen der Flüssigkeit vor dem Durchlauf durch den Erhitzer und der Flüssigkeit nach dem Durchlauf durch den Erhitzer tauschen kann. In diesem Fall hat der Trimkühler keinen Kühlmittelkreislauf, sondern tauscht Wärme zwischen heißer und kalter Flüssigkeit (Produkt-Produkt-Regeneration).

In anderen Wärmetauschern der Abfüllanlage kann die Regeneration von einem Kühlmittel (beispielsweise Wasser) zur Flüssigkeit erfolgen. Erhitzer und Kühler können als Wärmetauscher oder als konventionelle Kühler (beispielsweise mit einem Kühlturm) oder Erhitzer (beispielsweise durch Erhitzung mit Dampf) ausgebildet sein.

Die Abfüllanlage kann des Weiteren einen Tank zur Aufnahme von Flüssigkeit umfassen, der dazu geeignet ist (insbesondere bei einer Heißabfüllung), als Sammeltank zum Sammeln einer wässrigen Mischphase (Rework Tank), beispielsweise wie in EP 11 160 990.5 (Vorrichtung und Verfahren zum Ausmischen eines Getränks) beschrieben, und/oder, bei einer Kaltabfüllung, als steriler Puffertank (beispielsweise um Schwankungen in der Zuführung der Flüssigkeit auszugleichen) verwendet zu werden.

Der Flüssigkeitsweg für die Heißabfüllung kann in einer erfindungsgemäßen Abfüllanlage durch einen Vorwärmer, einen Erhitzer, dann optional über einen Trimkühler, und zum Füller verlaufen. Da bei einer Heißabfüllung der Füller typischerweise um ungefähr 10 % der Nennleistung (beispielsweise zwischen 5% und 15% der Nennleistung) überversorgt wird, damit er stabil läuft, und auch im Falle einer Störung im Füller die Ablaufanlage weiterlaufen kann, umfasst der Flüssigkeitsweg für die Heißabfüllung auch einen Weg, um nicht abgefüllte Flüssigkeit über den Rückkühler abzukühlen und zur noch nicht erhitzten Flüssigkeit (typischerweise vor dem Durchlauf der noch nicht erhitzten Flüssigkeit durch den Vorwärmer) zurückzuführen. Die Abfüllanlage ist typischerweise so ausgebildet, dass die Flüssigkeit nach dem Rückkühler optional in den Tank oder am Tank vorbei geleitet werden kann.

Der Flüssigkeitsweg für die Kaltabfüllung kann in einer erfindungsgemäßen Abfüllanlage durch einen Vorwärmer, dann optional über den Trimkühler, über den Rückkühler und dann optional über den Tank (falls eine Pufferung benötigt wird) oder am Tank vorbei zum Füller verlaufen. Der Flüssigkeitsweg für die Kaltabfüllung kann des Weiteren optional einen Weg umfassen, um nicht abgefüllte Flüssigkeit zur noch nicht erhitzten Flüssigkeit (typischerweise vor dem Durchlauf der noch nicht erhitzten Flüssigkeit durch den Vorwärmer) zurückzuführen.

Die Abfüllanlage kann so ausgebildet sein, dass der Kühlmittelkreislauf des Rückkühlers und/oder der Kühlmittelkreislauf des Vorwärmers einen Kühler umfassen. Hierbei ist gemeint, dass der jeweilige Kühlmittelkreislauf, der den Kühler umfasst, durch diesen Kühler gekühlt wird. Der Kühler kann zu- und abschaltbar sein, so dass er bei Bedarf zugeschaltet werden kann, und kann in jeder bekannten Weise ausgefüllt werden, beispielsweise durch einen Wärmetauscher oder aber durch andere bekannte Mittel. Wenn der Kühler also beispielsweise als Wärmetauscher ausgebildet ist, kann er einen Tertiärkreislauf für ein Mittel zum Kühlen des Kühlmittels aufweisen, um die Wärme abzuführen (beispielsweise in einen Kühlturm oder Ähnliches). Optional kann der oder die Kühler, wenn die Kühlmittelkreise des Vorwärmers und des Rückkühlers verbunden sind, in dem verbundenen Kühlmittelkreislauf so betreibbar sein, dass Wärme vom Kühlmittel vor dem Durchlauf des Kühlmittels durch den Rückkühler abgeführt werden kann. So ein Kühler kann beispielsweise dafür sorgen, dass Kühlmittel vor dem Durchlauf durch den optionalen Trimkühler oder den Rückkühler kalt genug ist, um die gewünschte Kühlwirkung zu erreichen.

Der Kühlmittelkreislauf des Vorwärmers kann zudem einen Erhitzer umfassen, der optional zuschaltbar und abschaltbar ist. Hierbei ist gemeint, dass der Kühlmittelkreislauf durch den Erhitzer erhitzt werden kann. Beispielsweise kann der Erhitzer so angeordnet sein, dass er das Kühlmittel vor dem Durchlauf des Kühlmittels durch den Vorwärmer erhitzen kann, so dass die Vorlauftemperatur des Vorwärmers angehoben werden kann. Dies kann beispielsweise für viskose Flüssigkeiten oder Flüssigkeiten mit schlechter Wärmeübertragung sinnvoll sein, da dann die gleiche Wärmemenge übertragen werden kann, ohne dass der Wärmetauscher vergrößert werden muss.

Die Abfüllanlage kann so ausgebildet sein, dass der Erhitzer (für die Flüssigkeit) als konventioneller Erhitzer ausgebildet ist, der in einer bekannten Weise die Flüssigkeit erhitzt, beispielsweise direkt oder indirekt durch Dampf. Der Erhitzer (für die Flüssigkeit) kann alternativ oder zusätzlich als Wärmetauscher ausgebildet sein. Dabei kann der Kühlmittelkreislauf des Erhitzers (für die Flüssigkeit) mit dem Kühlmittelkreislauf des Vorwärmers zusammenfallen. Dadurch kann die Rücklauftemperatur aus dem Erhitzer zum Vorwärmen der Flüssigkeit verwendet werden. In einer solchen Ausführungsform ist typischerweise ein Erhitzer im Kühlmittelkreislauf des Vorwärmers (und des Erhitzers für die Flüssigkeit) umfasst. Das Kühlmittel wird also typischerweise vor dem Durchlauf durch den Erhitzer aus einer weiteren, beispielsweise externen Wärmequelle (beispielsweise durch Dampf) erwärmt, um genügend Wärme übertragen zu können.

Die Abfüllanlage kann so ausgebildet sein, dass jeder getrennt betreibbare Kühlmittelkreislauf mindestens eine zuschaltbare Fördereinrichtung, beispielsweise eine Pumpe, umfasst. Typischerweise ist dabei mindestens eine zuschaltbare Fördereinrichtung im Kühlmittelkreislauf des Vorwärmers oder im Kühlmittelkreis des Rückkühlers so angeordnet, dass sie auch bei Zusammenschalten der Kreisläufe im zusammengeschalteten Kreislauf angeordnet ist.

Auch auf dem Weg der Flüssigkeit kann eine Fördereinrichtung zum Bewegen der Flüssigkeit vorhanden sein. In anderen Ausführungsformen kann die Flüssigkeit durch den Druck der zugeführten Flüssigkeit bewegt werden, so dass keine Fördereinrichtung zum Bewegen der Flüssigkeit notwendig ist.

Die Abfüllanlage kann eine Wärmeschaukel für eine Wärmerückgewinnung aus dem Rückkühler umfassen. Beispielsweise kann über einen Tertiärkreislauf (ein Kreislauf, mit dem Kühlmittelkreislauf Wärme zugeführt/ entzogen wird) Wärme vom Rückkühler zurückgewonnen werden, die dann, beispielsweise für das Vorwärmen, eingesetzt werden kann. Zudem kann dem Kühlmittelkreislauf des Vorwärmers vor Durchlauf des Kühlmittels durch den Vorwärmer (aber natürlich typischerweise nach Durchlauf des Kühlmittels durch den Trimkühler) Wärme aus anderen Wärmequellen zugeführt werden, wie beispielsweise beim Kühlen von mit Heißabfüllung gefüllten Behältern anfallenden Wärme und/oder andere Abwärme aus anderen Prozessen.. Dabei können einer oder mehrere Tertiärkreisläufe verwendet werden. Die Verwendung von (einem oder mehreren) Tertiärkreisläufen, um den Kühlmittelkreisläufen für die Flüssigkeit Wärme hinzuzuführen/ von ihnen Wärme abzuführen, hat den Vorteil, dass damit möglicherweise verunreinigte Tertiärkreisläufe, beispielsweise Kühltürme, Eiswasser oder Ähnliches, durch den Kühlmittelkreislauf für die Flüssigkeit getrennt werden können und damit einer möglichen Kontamination der Flüssigkeit (des Produkts) vorgebeugt werden kann.

Die Abfüllanlage kann so ausgebildet sein, dass eine Zuführung der Wärme aus einer oder mehrerer der genannten Quellen beispielsweise über einen Puffertank im Kühlmittelkreislauf erfolgen kann, beispielsweise wie in der DE 10 2011 082 286 A1, insbesondere in Bezug auf die Figur 1 und den Abs. [0008] [0029] offenbart.

Die Anmeldung DE 10 2008 056 597 A1 nennt Beispiele für Wärmequellen und Wärmerückgewinnung. Solche Wärmequellen können insbesondere auch von einer erfindungsgemäßen Abfüllanlage umfasst sein.

Die Erfindung umfasst des Weiteren ein Verfahren zum Wärmebehandeln und Abfüllen einer Flüssigkeit, in dem typischerweise eine oben beschriebene Abfüllanlage zum Wärmebehandeln und Abfüllen von Flüssigkeiten verwendet wird.

Insbesondere kann ein solches Verfahren ein Heißabfüllen und ein Kaltabfüllen umfassen. Es umfasst des Weiteren ein Umschalten eines Flüssigkeitswegs für die Heißabfüllung mittels einer Schaltmöglichkeit zu einem Flüssigkeitsweg für die Kaltabfüllung und/oder ein Umschalten eines Flüssigkeitswegs für die Kaltabfüllung zu einem Flüssigkeitsweg für die Heißabfüllung. Des Weiteren kann es den Schritt des Betreibens eines Kühlmittelkreises des Vorwärmers und eines Kühlmittelkreises des Rückkühlers als zwei voneinander getrennte Kühlmittelkreisläufe bei einer Heißabfüllung und/oder ein Betreiben der zuvor genannten Kühlmittelkreisläufe als ein verbundener Kühlmittelkreislauf und ein Schalten zwischen diesen beiden Einstellungen mit einer Schaltung umfassen.

Weitere Aspekte der Erfindung werden nun in den Figuren gezeigt. Hierbei zeigt
- Figur 1: eine schematische Darstellung eine Abfüllanlage;
- Figur 2: eine schematische Darstellung eines Ausschnitts einer Abfüllanlage;
- Figur 3: eine schematische Darstellung einer Abfüllanlage; und
- Figur 4: eine schematische Darstellung einer Abfüllanlage.

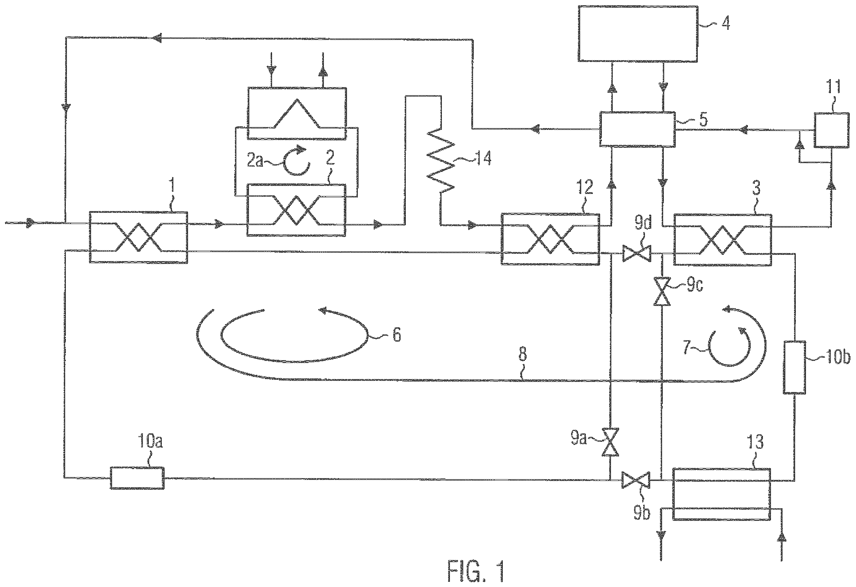

Figur 1 zeigt eine schematische Darstellung einer Abfüllanlage. Beispielhaft sind hier ein Vorwärmer 1, ein Erhitzer 2, ein Rückkühler 3 und ein Füller 4 gezeigt. Zudem ist eine Schaltmöglichkeit 5 zum Umschalten zwischen dem Flüssigkeitsweg für die Heißabfüllung und dem Flüssigkeitsweg für die Kaltabfüllung eingezeichnet. Der Erhitzer 2 kann, wie in diesem Beispiel gezeigt, als Wärmetauscher mit einem Sekundärkreislauf (Kühlmittelkreislauf) 2a ausgebildet sein, der wiederum durch eine externe Wärmequelle, beispielsweise Dampf versorgt wird. In anderen Ausführungsformen kann der Erhitzer die Flüssigkeit direkt erwärmen oder in anderer Form ausgebildet sein (nicht gezeigt).

In der beispielhaften Ausführungsform sind der Kühlmittelkreislauf 6 des Vorwärmers und der Kühlmittelkreislauf des Rückkühlers 7 eingezeichnet, die jeweils getrennt betrieben werden können. Durch eine Schaltung (hier exemplarisch eingezeichnet als Ventile 9a, 9b, 9c und 9d) können die Kühlmittelkreisläufe des Vorwärmers und des Rückkühlers als ein verbundener Kühlmittelkreislauf 8 betrieben werden.

Hierbei kann der Kühlmittelkreislauf 8 so ausgebildet sein, dass der Rücklauf des Rückkühlers über das Ventil 9d in den Vorlauf des Trimkühlers und vom Rücklauf des Trimkühlers in den Vorlauf des Vorwärmers transportiert wird. (Es können optional noch weitere Behandlungsstationen zwischen den genannten Behandlungsstationen angeordnet sein.) Damit kann die Wärme aus dem Trimkühler zum Vorwärmen der Flüssigkeit verwendet werden, wodurch insgesamt der Energieverbrauch der Anlage optimiert werden kann. Des Weiteren sind exemplarisch optional vorhandene Fördereinrichtungen 10a und 10b eingezeichnet, die beispielsweise als Pumpen oder Ähnliches ausgebildet sein können, um die Kühlmittelkreisläufe 6 und 7 bzw. 8 anzutreiben. Diese Fördereinrichtungen können zuschaltbar und abschaltbar sein, so dass sie nur bei Bedarf verwendet werden können. Insbesondere kann mindestens eine der beiden Fördereinrichtungen (im gezeigten Beispiel beide) so angeordnet sein, dass sie auch im verbundenen Kühlmittelkreislauf das Kühlmittel befördern können (dafür sollten sie insbesondere nicht in den Bereichen angeordnet sein, in denen bei verbundenem Kühlmittelkreislauf kein Kühlmittel fließt).

Des Weiteren kann, wie beispielhaft in Figur 1 gezeigt, die Abfüllanlage einen Trimkühler 12 und eine Heißhaltestrecke 14 umfassen. Insbesondere kann der Trimkühler 12 dafür geeignet sein, bei einer Heißabfüllung die Flüssigkeit auf eine bestimmte Temperatur für die Abfüllung herunterzukühlen (Korrekturkühlen).

Der Kühlmittelkreislauf des Rückkühlers kann optional einen weiteren Kühler 13 umfassen, der beispielsweise als Wärmetauscher oder in einer anderen bekannten Weise ausgebildet sein kann und die Wärme nach außen abführen kann. In anderen Ausführungsformen kann die Abfüllanlage so ausgebildet sein, dass die so gewonnene Wärme wieder an anderer Stelle in die Abfüllanlage zurückgeführt und dort verwendet werden kann.

Die Abfüllanlage kann des Weiteren einen Tank 11 umfassen sowie eine Umgehungsstrecke für den Tank, durch die Flüssigkeit um den Tank herum geführt werden kann. Der Tank kann beispielsweise dafür ausgebildet sein, als Rework Tank (beispielsweise bei einer Heißabfüllung) und/oder aseptischer Puffertank (bei einer Kaltabfüllung) verwendet zu werden. In Figur 1 können noch weitere Behandlungsstationen, wie oben beschrieben, umfasst sein (nicht gezeigt), und die gezeigten Behandlungsstationen können jeweils zwei- oder mehrstufig ausgebildet sein (ebenfalls nicht gezeigt).

In dem gezeigten Beispiel von Figur 1 verläuft der Flüssigkeitsweg durch einen Vorwärmer 1, einen Erhitzer 2, eine Heißhaltestrecke 14 und einen Trimkühler 12 bis zur Schaltmöglichkeit 5. Bei Verwendung der Abfüllanlage für eine Heißabfüllung wird die Flüssigkeit dann in den Füller 4 geleitet und dort abgefüllt. Vom Füller nicht abgefüllte Flüssigkeit wird vom Füller zurückgeleitet und über einen Rückkühler 3, optional durch einen Tank 11 oder durch die Umgehungsstrecke für den Tank 11, über eine Schaltmöglichkeit 5 zurück zur noch nicht erhitzten Flüssigkeit geführt.

Bei einer Kaltabfüllung verläuft der Flüssigkeitsweg im Beispiel von Figur 1 durch den Vorwärmer 1, den Erhitzer 2, die Heißhaltestrecke 14 und den Trimkühler 12 bis zur Schaltmöglichkeit 5, von dort zum Rückkühler 3 und, optional durch den Tank 11 oder durch die Umgehungsstrecke für den Tank 11, über die Schaltmöglichkeit 5 zum Füller 4. Eventuell nicht abgefüllte Flüssigkeit kann dann zurück zur noch nicht erhitzten Flüssigkeit geführt werden.

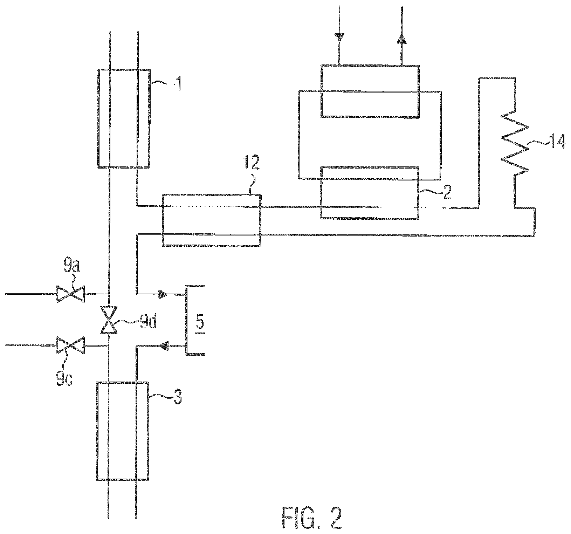

Die Figur 2 zeigt einen Ausschnitt einer Abfüllanlage mit einer alternativen Anordnung und Ausbildung von dem Vorwärmer 1, dem Erhitzer 2, dem Trimkühler 12, wie sie in einigen Ausführungsformen der Erfindung verwendet werden kann. Eine solche Anordnung kann beispielsweise in einer Abfüllanlage, wie in Figur 1 gezeigt, umfasst sein als Alternative zu der dort gezeigten Anordnung und Ausbildung von dem Vorwärmer, dem Erhitzer und dem Trimkühler. Die weiteren eingezeichneten optionalen Behandlungsstationen und von der Abfüllanlage umfassten Teile können beispielsweise den in Figur 1 beschriebenen Bauteilen entsprechen, und werden, soweit bezeichnet, mit den entsprechenden Referenzzeichen bezeichnet und nicht weiter erläutert.

Im Beispiel der Figur 2 ist der Trimkühler 12 so ausgebildet, dass die Flüssigkeit auf dem Weg zum Erhitzer 2 durch den Trimkühler 12 geführt wird und, nach Durchlauf der Heißhaltestrecke 14, durch den Trimkühler 12 zurückgeführt wird, so dass beim Abkühlen der Flüssigkeit auf die nach Durchlaufen des Trimkühlers gewünschte Temperatur Wärme zum Vorwärmen der Flüssigkeit (vor dem Erhitzen) verwendet werden kann. In dem gezeigten Beispiel kann der Trimkühler 12 also insbesondere auch als weiterer Vorwärmer (oder als zweite Stufe eines Vorwärmers) betrachtet werden und wirken. Somit ist eine direkte Übertragung der Wärme von heißer zu kalter Flüssigkeit ohne Sekundärkreislauf möglich (Flüssigkeits-Flüssigkeit-Regeneration bzw. Produkt-Produkt-Regeneration).

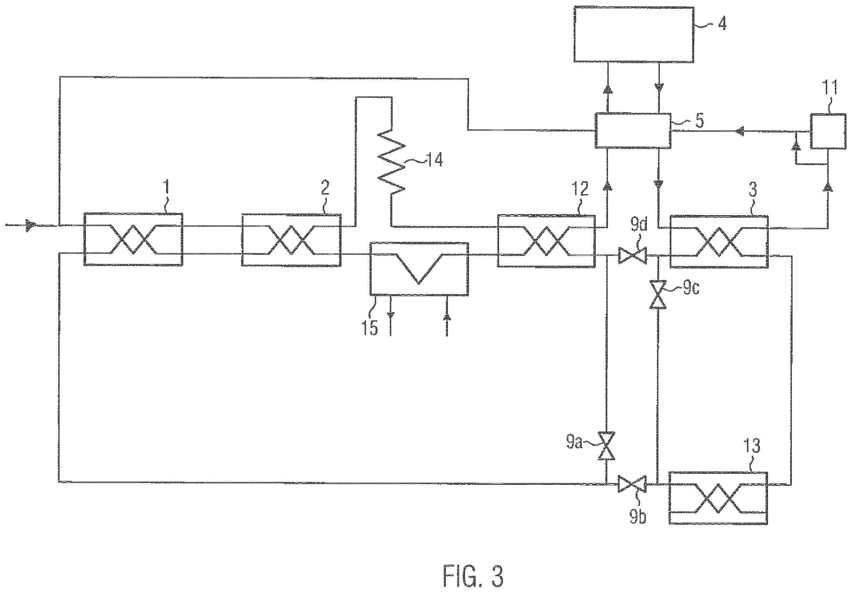

Die Figur 3 zeigt eine weitere schematische Ausführungsform einer Abfüllanlage, in der der Kühlmittelkreislauf des Erhitzers 2 und des Vorwärmers 1 zusammenfallen. Insbesondere kann hierbei Kühlmittel aus dem Rücklauf des Trimkühlers 12 über einen Erhitzer 15 erhitzt und dann in den Vorlauf des Erhitzers 2 geleitet werden, wo die Flüssigkeit erhitzt werden kann. Der Erhitzer 15 kann auf eine der bekannten Arten, beispielsweise durch Dampf, Wärme zuführen. Im gezeigten Beispiel wird das Kühlmittel aus dem Rücklauf des Erhitzers in den Vorlauf des Vorwärmers geführt, so dass verbleibende Wärme zum Vorwärmen der Flüssigkeit verwendet werden kann. Die weiteren eingezeichneten optionalen Behandlungsstationen und optional von der Abfüllanlage umfassten Teile können den in Figur 1 beschriebenen Bauteilen entsprechen, und sind, soweit bezeichnet, mit den entsprechenden Referenzzeichen bezeichnet. Sie werden daher nicht weiter erläutert.

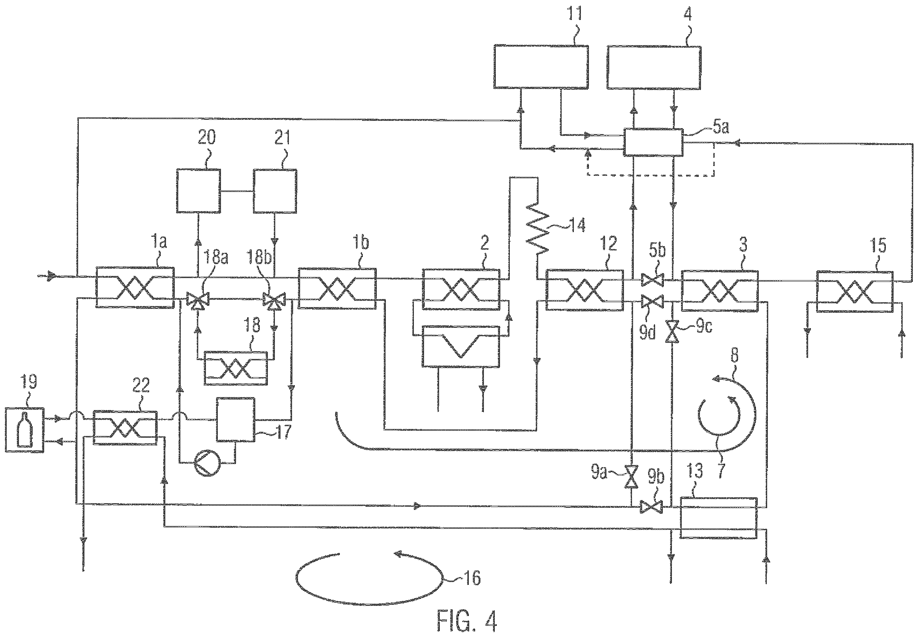

Die Figur 4 zeigt eine weitere schematische Darstellung einer Abfüllanlage. Die dort gezeigten zusätzlichen oder alternativen Elemente können natürlich auch in jeder der zuvor beschriebenen Abfüllanlagen aus den Figuren 1 bis 3 einzeln oder in Kombination oder alternativ zu den dort gezeigten Elementen umfasst sein.

Die weiteren eingezeichneten (optionalen) Behandlungsstationen und von der Abfüllanlage umfassten Teile können beispielsweise den in Figur 1 beschriebenen Bauteilen entsprechen, und werden, soweit bezeichnet, mit den entsprechenden Referenzzeichen bezeichnet und nicht weiter erläutert.

In dem gezeigten Beispiel ist der Vorwärmer als zweistufiger Vorwärmer mit dem Vorwärmer 1a und dem Vorwärmer 1b ausgebildet. Zwischen die beiden Vorwärmstufen können optionale Behandlungsstationen wie beispielsweise ein Entgaser 20 und/oder ein Homogenisator 21 angeordnet sein. Der Kühlmittelkreislauf 7 des Rückkühlers 3 (bzw. der Kühlmittelkreislauf 8 des verbundenen Kühlmittelkreislaufs) können durch einen optionalen, als Wärmetauscher ausgebildeten, Kühler 13 zusätzlich gekühlt werden, so dass die dem Rückkühler zugeführte Kühlmittel eine geeignete Temperatur hat. Der Tertiärkreislauf 16, der dafür ausgelegt ist, Wärme vom Kühlmittel vor dem Rückkühler wegzuführen, kann so ausgebildet sein, dass er Wärme, hier exemplarisch über einen Wärmetauscher 22, einem Kühlmittelstrom zuführt, der in einen Puffertank 17 zugeführt werden kann. Diesem Kühlmittel und insbesondere dem Puffertank 17 kann auch durch weitere externe Quellen, wie beispielsweise durch einen exemplarisch gezeigten Flaschenkühler 19, in dem Flaschen nach einer Heißabfüllung gekühlt werden, oder durch Abwärme aus anderen Quellen, Wärme zugeführt werden. Die Wärme kann im Puffertank gespeichert werden und bei Bedarf an den Kühlmittelkreislauf abgegeben werden. Durch die Verwendung eines Puffertanks mit mehreren Wärmequellen kann die anfallende Wärme gleichmäßig an den Sekundärkreislauf abgegeben werden, auch wenn ab und zu die eine oder andere Wärmequelle keine Wärme liefert.

Des Weiteren kann eine Abfüllanlage, wie exemplarisch in Figur 4 gezeigt, einen Erhitzer 18 umfassen, der (durch Ventile 18a und 18b) zuschaltbar den Kühlmittelkreislauf vor dem Vorwärmer 1a erwärmen kann, so dass mehr Wärme zugeführt werden kann, ohne dass es notwendig ist, den Vorwärmer zu vergrößern. Dies kann insbesondere bei viskosen Flüssigkeiten oder Flüssigkeiten mit schlechtem Wärmeleitvermögen vorteilhaft sein, da es den Wärmeübertrag erhöhen kann, ohne eine Vergrößerung des Vorwärmers 1a zu erfordern.

In Figur 4 ist ebenfalls zu sehen, dass die Schaltmöglichkeit mehrteilig ausgebildet sein kann, siehe die Teile 5a, 5b der Schaltmöglichkeit. Im gezeigten Beispiel umfasst sie neben dem beispielhaft gezeigtem Ventil 5b beispielhaft auch noch den Bereich 5a, der ebenfalls als Ventilknoten oder anders, beispielsweise als Panel oder Ähnliches ausgebildet sein kann. Alternativ kann die Schaltmöglichkeit als Panel, Ventilknoten oder in einer anderen Weise ausgebildet sein (nicht gezeigt).

Des Weiteren kann, wie ebenfalls in Figur 4 zu sehen, nach dem Rückkühler 3 noch ein weiterer Kühler 15 von der Abfüllanlage umfasst sein, um die Temperatur der Flüssigkeit geeignet einzustellen, wenn sie nach Durchlauf durch den Rückkühler noch zu hoch ist, um die Flüssigkeit weiter verwenden zu können. Dieser Kühler 15 kann bei Bedarf zu- und abschaltbar sein und in jeder aus dem Stand der Technik bekannten Form, beispielsweise als Wärmetauscher, ausgebildet sein.

## Patentansprüche

1. Abfüllanlage zum Wärmebehandeln und Abfüllen von einer Flüssigkeit, umfassend einen Vorwärmer (1) zum Vorwärmen der Flüssigkeit,
einen Erhitzer (2) zum Erhitzen der Flüssigkeit nach dem Vorwärmen,
einen Rückkühler (3) zum Abkühlen der Flüssigkeit nach dem Erhitzen, und
einen Füller (4) zum Abfüllen der Flüssigkeit,
wobei die Abfüllanlage für eine Heißabfüllung und eine Kaltabfüllung geeignet ist, wobei der Flüssigkeitsweg vom Vorwärmer (1) zum Füller (4) für die Heißabfüllung von dem Flüssigkeitsweg vom Vorwärmer (1) zum Füller (4) für die Kaltabfüllung verschieden ist und die Abfüllanlage eine Schaltmöglichkeit (5) zum Umschalten zwischen den beiden Flüssigkeitswegen umfasst.

2. Abfüllanlage nach Anspruch 1, wobei der Vorwärmer (1) als Wärmetauscher ausgebildet ist und wobei der Rückkühler (3) als Wärmetauscher ausgebildet ist, und wobei der Kühlmittelkreislauf des Vorwärmers (6) und der Kühlmittelkreislauf des Rückkühlers (7) in einer ersten Einstellung als zwei voneinander getrennte Kühlmittelkreisläufe und in einer zweiten Einstellung als ein verbundener Kühlmittelkreislauf (8) betreibbar sind, wobei die Abfüllanlage eine Schaltung (9) zum Schalten zwischen diesen beiden Einstellungen umfasst.

3. Abfüllanlage nach einem der vorhergehenden Ansprüche, die des Weiteren einen Trimkühler (12) zum Kühlen der Flüssigkeit auf eine bestimmte Temperatur umfasst, der so in der Abfüllanlage angeordnet ist, dass er von der Flüssigkeit nach dem Erhitzen und vordem Durchlauf durch den Rückkühler (7) durchlaufen wird.

4. Abfüllanlage nach dem vorhergehenden Anspruch, wobei der Trimkühler (12) als Wärmetauscher ausgebildet ist.

5. Abfüllanlage nach Anspruch 3 oder 4, wobei der Kühlmittelkreislauf des Trimkühlers (12) mit dem Kühlmittelkreislauf des Vorwärmers (1) zusammenfällt.

6. Abfüllanlage nach Anspruch 3 oder 4, wobei der Trimkühler (12) in der Abfüllanlage so angeordnet ist, dass er dazu geeignet ist, Wärme zwischen der Flüssigkeit vor dem Durchlauf durch den Erhitzer (2) und der Flüssigkeit nach dem Durchlauf durch den Erhitzer (2) zu tauschen.

7. Abfüllanlage nach einem der vorhergehenden Ansprüche, wobei die Abfüllanlage des Weiteren einen Tank (11) für eine Flüssigkeit umfasst, der dazu geeignet ist, insbesondere bei der Heißabfüllung, als Rework Tank und bei der Kaltabfüllung als steriler Puffertank verwendet zu werden.

8. Abfüllanlage nach einem der vorhergehenden Ansprüche,
wobei der Flüssigkeitsweg für die Heißabfüllung durch den Vorwärmer (1), den Erhitzer (2), optional über den Trimkühler (12), zum Füller (4) verläuft und, für nicht abgefüllte Flüssigkeit, über den Rückkühler (3), und optional über den Tank (11) oder die Umgehungsstrecke für den Tank, zur noch nicht erhitzten Flüssigkeit zurück verläuft, und/oder
wobei der Flüssigkeitsweg für die Kaltabfüllung, durch den Vorwärmer (1), optional über den Trimkühler (12), über den Rückkühler (3), und optional über den Tank (11) oder über die Umgehungsstrecke für den Tank, zum Füller (4), und optional, für nicht abgefüllte Flüssigkeit, zur noch nicht erhitzten Flüssigkeit zurück verläuft.

9. Abfüllanlage nach einem der vorhergehenden Ansprüche, wobei der Kühlmittelkreislauf des Rückkühlers (3) und/oder der Kühlmittelkreislauf des Vorwärmers (6) einen Kühler (13) umfasst, der optional auch, wenn die Kühlmittelkreise des Vorwärmers (6) und des Rückkühlers (3) verbunden sind, in dem verbundenen Kühlmittelkreislauf betreibbar ist und/oder wobei der Kühlmittelkreislauf des Vorwärmers (6) einen Erhitzer (15) umfasst.

10. Abfüllanlage nach einem der vorhergehenden Ansprüche, wobei der Kühlmittelkreislauf eines als Wärmetauscher ausgebildeten Erhitzers mit dem Kühlmittelkreislauf des Vorwärmers (1) verbunden ist.

11. Abfüllanlage nach dem vorhergehenden Anspruch, wobei jeder getrennt betreibbare Kühlmittelkreislauf (6, 7, 8) mindestens eine zuschaltbare Fördereinrichtung (10a, 10b) umfasst.

12. Abfüllanlage nach einem der vorhergehenden Ansprüche, wobei die Abfüllanlage eine Wärmeschaukel für eine Wärmerückgewinnung aus dem Rückkühler (3) umfasst.

13. Verfahren zum Wärmebehandeln und Abfüllen einer Flüssigkeit, in dem eine Abfüllanlage nach einem der Ansprüche 1 bis 12 zum Wärmebehandeln und Abfüllen von Flüssigkeiten verwendet wird, wobei die Abfüllanlage optional bei einer Heißabfüllung und/oder einer Kaltabfüllung verwendet wird.

14. Verfahren nach Anspruch 13, des Weiteren umfassend ein Umschalten eines Flüssigkeitsweges für die Heißabfüllung mittels einer Schaltmöglichkeit zu einem Flüssigkeitsweg für die Kaltabfüllung und/oder ein Umschalten eines Flüssigkeitsweges für die Kaltabfüllung zu einem Flüssigkeitsweg für die Heißabfüllung.

15. Verfahren nach Anspruch 13 oder 14, des Weiteren umfassend ein Betreiben eines Kühlmittelkreises des Vorwärmers (1) und eines Kühlmittelkreises des Rückkühlers (3) als zwei voneinander getrennte Kühlmittelkreisläufe bei einer Heißabfüllung und/oder ein Betreiben der zuvor genannten Kühlmittelkreisläufe als ein verbundener Kühlmittelkreislauf und ein Schalten zwischen diesen beiden Einstellungen mit einer Schaltung.

## Claims

1. Filling line for heat-treating and filling a liquid, comprising
a pre-heater (1) for pre-heating the liquid,
a heater (2) for heating the liquid after the pre-heating,
a cooler (3) for cooling down the liquid after the heating, and
a filling unit (4) for filling the liquid,
where the filling line is suitable for hot filling and cold filling, where the liquid path from the pre-heater (1) to the filling unit (4) for the hot filling differs from the liquid path from the pre-heater (1) to the filling unit (4) for the cold filling, and the filling line comprises a switching option (5) for switching between the two liquid paths.

2. Filling line according to claim 1, where the pre-heater (1) is configured as a heat exchanger and where the cooler (3) is configured as a heat exchanger, and where the coolant circuit of the pre-heater (6) and the coolant circuit of the cooler (7) are operable with a first setting as two separate coolant circuits and are operable with a second setting as one combined coolant circuit (8), where the filling line comprises a switch (9) for switching between these two settings.

3. Filling line according to one of the preceding claims, further comprising a trim cooler (12) for cooling the liquid to a certain temperature and being located in the filling line such that the liquid passes therethrough after the heating and prior to passing through the cooler (7).

4. Filling line according to the preceding claim, where the trim cooler (12) is configured as a heat exchanger.

5. Filling line according to claim 3 or 4, where the coolant circuit of the trim cooler (12) coincides with the coolant circuit of the pre-heater (1).

6. Filling line according to claim 3 or 4, where the trim cooler (12) is arranged in the filling line such that it is adapted to exchange heat between the liquid before it passes through the heater (2) and the liquid after having passed through the heater (2).

7. Filling line according to one of the preceding claims, where the filling line further comprises a tank (11) for a liquid which is suitable to be used as a rework tank, in particular for the hot filling, and as a sterile buffer tank for the cold filling.

8. Filling line according to one of the preceding claims,
where the liquid path for the hot filling runs through the pre-heater (1), the heater (2), optionally via the trim cooler (12), to the filling unit (4) and, for liquid that has not been filled, via the cooler (3), and optionally via the tank (11) or the bypass line for the tank, back to the liquid not yet heated, and/or
where the liquid path for the cold filling runs through the pre-heater (1), optionally via the trim cooler (12), via the cooler (3), and optionally via the tank (11) or via the bypass line for the tank, to the filling unit (4), and optionally, for liquid that has not been filled, back to the liquid not yet heated.

9. Filling line according to one of the preceding claims, where the coolant circuit of the cooler (3) and/or the coolant circuit of the pre-heater (6) comprises a cooler (13), which optionally, when the coolant circuits of the pre-heater (6) and the cooler (3) are combined, is operable also in the combined coolant circuit and/or where the coolant circuit of the pre-heater (6) comprises a heater (15).

10. Filling line according to one of the preceding claims, where the coolant circuit of a heater being configured as a heat exchanger is combined with the coolant circuit of the pre-heater (1).

11. Filling line according to the preceding claim, where each separately operable coolant circuit (6, 7, 8) comprises at least one switchable delivery device (10a, 10b).

12. Filling line according to one of the preceding claims, where the filling line comprises a heat swing for heat recovery from the cooler (3).

13. Method for heat-treating and filling a liquid, in which a filling line according to one of the claims 1 to 12 is used for heat-treating and filling liquids, where the filling line is optionally used for hot filling and/or for cold filling.

14. Method according to claim 13, further comprising switching a liquid path for the hot filling by way of a switching option to a liquid path for the cold filling and/or switching a liquid path for the cold filling to a liquid path for the hot filling.

15. Method according to claim 13 or 14, further comprising operating a coolant circuit of the pre-heater (1) and a coolant circuit of the cooler (3) as two separate coolant circuits when hot filling and/or operating the aforementioned coolant circuits as a combined coolant circuit and switching between these two settings using a switch.

## Revendications

1. Installation de traitement thermique et de remplissage d'un liquide, comprenant
un préchauffeur (1) pour préchauffer le liquide,
un réchauffeur (2) pour chauffer le liquide après le préchauffage,
un refroidisseur (3) pour refroidir le liquide après chauffage, et
un dispositif de remplissage (4) pour le remplissage du liquide,
l'installation de remplissage étant conçue pour le remplissage à chaud et au remplissage à froid, le chemin du fluide du préchauffeur (1) au dispositif de remplissage (4) pour le remplissage à chaud étant différent du chemin du fluide du préchauffeur (1) au dispositif de remplissage (4) pour le remplissage à froid, et l'installation de remplissage comprenant un moyen de commutation (5) pour commuter entre les deux chemins de fluide.

2. Installation de remplissage selon la revendication 1, dans lequel le préchauffeur (1) est conçu comme échangeur de chaleur et le refroidisseur (3) est conçu comme échangeur de chaleur, et dans lequel le circuit de fluide de refroidissement du préchauffeur (6) et le circuit de fluide de refroidissement du refroidisseur (7) peuvent fonctionner dans un premier mode comme deux circuits de fluide de refroidissement séparés l'un de l'autre et dans un second mode comme un circuit de fluide de refroidissement raccordé (8), dans lequel le système de remplissage comprend un circuit (9) pour commuter entre ces deux modes.

3. Installation de remplissage selon l'une des revendications précédentes, comprenant en outre un refroidisseur de garniture (12) pour refroidir le liquide à une certaine température, qui est disposé dans l'installation de remplissage de telle sorte qu'il est traversé par le liquide après le chauffage et avant de passer par le refroidisseur (7).

4. Installation de remplissage selon la revendication précédente, dans laquelle le refroidisseur de garniture (12) est conçu comme échangeur de chaleur.

5. Installation de remplissage selon les revendications 3 ou 4, dans laquelle le circuit de refroidissement du refroidisseur de garniture (12) coïncide avec le circuit de refroidissement du préchauffeur (1).

6. Installation de remplissage selon les revendications 3 ou 4, dans laquelle le refroidisseur de garniture (12) est disposé dans le système de remplissage de manière à être conçu pour échanger de la chaleur entre le liquide avant de passer à travers le réchauffeur (2) et le liquide après être passé à travers le réchauffeur (2).

7. Installation de remplissage selon l'une des revendications précédentes, dans laquelle l'installation de remplissage de la blanche comprend un réservoir (11) pour un liquide, qui est approprié pour être utilisé en particulier dans le remplissage à chaud, comme réservoir de reprise et dans le remplissage à froid comme réservoir tampon stérile.

8. Installation de remplissage selon l'une des revendications précédentes, dans lequel le chemin du liquide pour le remplissage à chaud passe par le préchauffeur (1), le réchauffeur (2), éventuellement par le refroidisseur de garniture (12), jusqu'au dispositif de remplissage (4) et, pour le liquide non rempli, par le refroidisseur (3), et éventuellement par le réservoir (11) ou la dérivation pour le réservoir, pour revenir au liquide non encore chauffé, et/ou
dans laquelle le chemin du liquide pour le remplissage à froid, par le biais du préchauffeur (1), éventuellement par le biais du refroidisseur de garntiture (12), par le biais du refroidisseur (3), et éventuellement par le biais du réservoir (11) ou par le biais de la dérivation pour le réservoir, jusqu'au dispositif de remplissage (4), et éventuellement, pour le liquide non rempli, de retour au liquide non encore chauffé.

9. Installation de remplissage selon l'une des revendications précédentes, dans laquelle le circuit de fluide de refroidissement du refroidisseur (3) et/ou le circuit de fluide de refroidissement du préchauffeur (6) comprend un refroidisseur (13), qui, lorsque les circuits de fluide de refroidissement du préchauffeur (6) et du refroidisseur (3) sont raccordés, peut éventuellement fonctionner également dans le circuit de fluide de refroidissement raccordé et/ou dans laquelle le circuit de fluide de refroidissement du préchauffeur (6) comprend un réchauffeur (15).

10. Installation de remplissage selon l'une des revendications précédentes, dans lequel le circuit de liquide de refroidissement d'un réchauffeur conçu comme un échangeur de chaleur est relié au circuit de liquide de refroidissement du préchauffeur (1).

11. Installation de remplissage selon la revendication précédente, dans laquelle chaque circuit de refroidissement (6, 7, 8) pouvant fonctionner séparément comprend au moins un dispositif de transport (10a, 10b) pouvant être connecté.

12. Installation de remplissage selon l'une des revendications précédentes, dans laquelle l'installation de remplissage comprend un échangeur de chaleur pour la récupération de la chaleur du refroidisseur (3).

13. Procédé de traitement thermique et de remplissage d'un liquide, dans lequel une installation de remplissage selon l'une des revendications 1 à 12 est utilisée pour le traitement thermique et le remplissage de liquides, l'installation de remplissage étant utilisée au choix dans un remplissage à chaud et/ou un remplissage à froid.

14. Procédé selon la revendication 13, comprenant en outre la commutation d'un chemin de liquide pour le remplissage à chaud au moyen d'une installation de commutation vers un chemin de liquide pour le remplissage à froid et/ou la commutation d'un chemin de liquide pour le remplissage à froid vers un chemin de liquide pour le remplissage à chaud.

15. Procédé selon les revendications 13 ou 14, comprenant en outre le fonctionnement d'un circuit de refroidissement du préchauffeur (1) et d'un circuit de refroidissement du refroidisseur (3) en tant que deux circuits de refroidissement séparés dans un remplissage à chaud et/ou le fonctionnement des circuits de refroidissement susmentionnés en tant que circuit de refroidissement connecté et la commutation entre ces deux réglages avec un commutateur.
